# EUROPÄISCHE PATENTSCHRIFT

(11) **EP 2 828 331 B1**
(45) Veröffentlichungstag und Bekanntmachung des Hinweises auf die Patenterteilung: **06.07.2016**
(21) Anmeldenummer: 13709931.3
(22) Anmeldetag: 19.03.2013
(51) Int. Cl.: C08K 5/57

(54) **ZUSAMMENSETZUNG AUF BASIS VON SILANTERMINIERTEN POLYMEREN**
COMPOSITION BASED ON SILANE TERMINATED POLYMERS
COMPOSITION À BASE DE POLYMÈRES FIXÉS PAR SILANE

(30) Priorität: 19.03.2012 EP 12160128
(43) Veröffentlichungstag der Anmeldung: 28.01.2015
(73) Patentinhaber: Sika Technology AG, 6340 Baar (CH)
(72) Erfinder: RUTZ, Daniele, 8047 Zürich (CH); AZARMGIN, Ghazale, CH-8004 Zürich (CH)
(74) Vertreter: Sika Patent Attorneys
(86) Internationale Anmeldenummer: PCT/EP2013/055624
(87) Internationale Veröffentlichungsnummer: WO 2013/139759

(56) Entgegenhaltungen:
- EP-A1- 1 894 947
- WO-A2-02/068501

## Beschreibung

### Technisches Gebiet

Die Erfindung betrifft feuchtigkeitshärtende Zusammensetzungen auf Basis silanfunktioneller Polymere, welche sich als Klebstoffe, Dichtstoffe oder Beschichtungen eignen.

### Stand der Technik

Feuchtigkeitshärtende Zusammensetzungen auf Basis von silanfunktionellen Polymeren sind bekannt und werden seit geraumer Zeit als elastische Klebstoffe, Dichtstoffe und Beschichtungen eingesetzt.

Als Katalysator- oder Beschleunigersysteme für die Vernetzung von Zusammensetzungen enthaltend silanfunktionelle Polymere unter Einfluss von Wasser werden insbesondere zinnorganische Verbindungen eingesetzt. Auch bekannt ist der Einsatz von Titanaten zu diesem Zweck.

Es hat sich dabei gezeigt, dass Systeme, welche mit Titanaten aushärten gegenüber den System mit zinnorganischen Verbindungen überlegene mechanische Eigenschaften aufweisen, was in der Regel einen bedeutenden Vorteil darstellt.

Der Nachteil derartiger Zusammensetzungen liegt hingegen darin, dass sich durch den Einsatz der Titanate im Vergleich zu den zinnorganischen Verbindungen die Aushärtungsreaktivität der Zusammensetzung deutlich verringert.

### Darstellung der Erfindung

Aufgabe der vorliegenden Erfindung ist es daher, eine feuchtigkeitshärtende Zusammensetzung auf Basis von silanfunktionellen Polymeren bereitzustellen, welche im ausgehärteten Zustand über verbesserte mechanische Eigenschaften verfügt und gleichzeitig bei der Aushärtung eine kurze Hautbildungszeit aufweist.

Überraschenderweise wurde nun gefunden, dass Zusammensetzungen gemäss Anspruch 1 diese Aufgabe lösen.

Durch den Einsatz von zinnorganischen Verbindungen und Titanaten in den genau definierten Gewichtsteilen ist es möglich, Zusammensetzungen bereitzustellen, welche im ausgehärteten Zustand über verbesserte mechanische Eigenschaften verfügen, ohne dabei die Hautbildungszeit in einer Art und Weise zu verändern, welche Anpassungen an Applikations- und Verarbeitungsprozessen erforderlich machen würden.

### Wege zur Ausführung der Erfindung

Gegenstand der vorliegenden Erfindung ist eine Zusammensetzung umfassend
a) mindestens ein silanfunktionelles Polymer **P**,
b) mindestens eine zinnorganische Verbindung sowie
c) mindestens ein Titanat,
wobei der Anteil an zinnorganischer Verbindung 0.01 bis 0.15 Gew.-% und der Anteil an Titanat 0.05 bis 1 Gew.-% jeweils bezogen auf die Gesamtzusammensetzung beträgt.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.

Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen). Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Unter "Molekulargewicht" versteht man im vorliegenden Dokument stets das Molekulargewichtsmittel Mₙ (Zahlenmittel).

Als "Raumtemperatur" wird im vorliegenden Dokument eine Temperatur von 23°C bezeichnet.

Die erfindungsgemässe Zusammensetzung enthält mindestens ein silanfunktionelles Polymer **P**, welches insbesondere Endgruppen der Formel (I) aufweist.

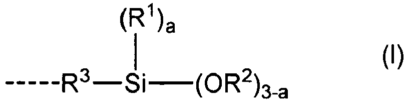

Dabei steht der Rest R¹ für einen linearen oder verzweigten, einwertigen Kohlenwasserstoffrest mit 1 bis 8 C-Atomen, insbesondere für eine Methyl- oder für eine Ethylgruppe.

Der Rest R² steht für einen Acylrest oder für einen linearen oder verzweigten, einwertigen Kohlenwasserstoffrest mit 1 bis 5 C-Atomen, insbesondere für eine Methyl- oder für eine Ethyl- oder für eine Isopropylgruppe.

Der Index a steht für einen Wert von 0 oder 1 oder 2, insbesondere für einen Wert von 0.

Der Rest R³ steht für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere ein oder mehrere Stickstoffatome, aufweist.

Innerhalb einer Silangruppe der Formel (I) stehen R¹ und R² jeweils unabhängig voneinander für die beschriebenen Reste. So sind beispielsweise auch Verbindungen mit Endgruppen der Formel (I) möglich, welche Ethoxy-dimethoxysilan-Endgruppen (R² = Methyl, R² = Methyl, R² = Ethyl) sind.

In einer ersten Ausführungsform ist das silanfunktionelle Polymer P ein silanfunktionelles Polyurethanpolymer **P1,** welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **P1** gänzlich frei von Isocyanatgruppen ist.

In der Umsetzung des Silans, welches mindestens eine gegenüber Isocyanatgruppen reaktive Gruppe aufweist, mit einem Polyurethanpolymer, welches Isocyanatgruppen aufweist, kann das Silan prinzipiell, wenn auch nicht bevorzugt, unterstöchiometrisch eingesetzt werden, so dass ein silanfunktionelles Polymer erhalten wird, welches sowohl Silangruppen als auch Isocyanatgruppen aufweist.

Das Silan, welches mindestens eine gegenüber Isocyanatgruppen reaktive Gruppe aufweist, ist beispielsweise ein Mercaptosilan oder ein Aminosilan, insbesondere ein Aminosilan.

Bevorzugt ist das Aminosilan ein Aminosilan **AS** der Formel (II), 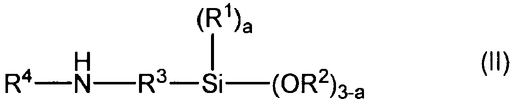 wobei R¹, R², R³ und a bereits vorhergehend beschrieben worden sind und R⁴ für ein Wasserstoffatom oder für einen linearen oder verzweigten, einwertigen Kohlenwasserstoffrest mit 1 bis 20 C-Atomen, welcher gegebenenfalls cyclische Anteile aufweist, oder für einen Rest der Formel (III) steht.

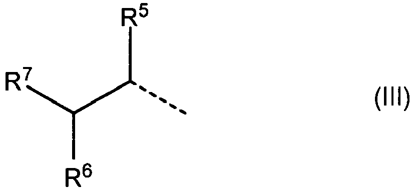

Dabei stehen die Reste R⁵ und R⁶ jeweils unabhängig voneinander für ein Wasserstoffatom oder für einen Rest aus der Gruppe bestehend aus -R⁸, -COOR⁸ und -CN.

Der Rest R⁷ steht für ein Wasserstoffatom oder für einen Rest aus der Gruppe bestehend aus -CH₂-COOR⁸, -COOR⁸, -CONHR⁸, -CON(R⁸)₂, -CN, -NO₂, -PO(OR⁸)₂, -SO₂R⁸ und -SO₂OR⁸.
Der Rest R⁸ steht für einen, gegebenenfalls mindestens ein Heteroatom aufweisenden, Kohlenwasserstoffrest mit 1 bis 20 C-Atomen.

Beispiele für geeignete Aminosilane **AS** sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, (Meth)acrylsäureestern, (Meth)acrylsäureamiden, Maleinsäure- und Fumarsäurediestern, Citraconsäurediestern und Itaconsäurediestern, beispielsweise N-(3-Trimethoxysilyl-propyl)-amino-bernsteinsäuredimethyl- und -diethylester; sowie Analoga der genannten Aminosilane mit Ethoxy- oder Isopropoxygruppen anstelle der Methoxygruppen am Silicium. Als Aminosilane **AS** besonders geeignet sind sekundäre Aminosilane, insbesondere Aminosilane **AS,** bei denen R⁴ in Formel (II) verschieden von H ist. Bevorzugt sind die Michael-artigen Addukte, insbesondere N-(3-Trimethoxysilyl-propyl)-amino-bernsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Isocyanatgruppen aufweisendes Polyurethanpolymer zur Herstellung eines silanfunktionellen Polyurethanpolymers **P1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.
Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.
Gegebenenfalls kann das Polyurethanpolymer unter Mitverwendung von Weichmachern hergestellt werden, wobei die verwendeten Weichmacher keine gegenüber Isocyanaten reaktive Gruppen enthalten.
Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2.2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylol-ethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Tri-methylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche Polyisocyanate, insbesondere Diisocyanate, verwendet werden.

Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.

Beispielsweise sind geeignete silanfunktionelle Polymere **P1** kommerziell erhältlich unter den Handelsnamen Polymer ST, beispielsweise Polymer ST50, von der Firma Hanse Chemie AG, Deutschland, sowie unter dem Handelsnamen Desmoseal^{®} von der Firma Bayer MaterialScience AG, Deutschland.

Das silanfunktionelle Polymer **P** ist in einer zweiten Ausführungsform ein silanfunktionelles Polyurethanpolymer **P2,** erhältlich durch die Umsetzung eines Isocyanatosilans **IS** mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20°C bis 100°C, gegebenenfalls unter Mitverwendung von Katalysatoren.

Als Isocyanatosilan IS geeignet sind Verbindungen der Formel (IV). 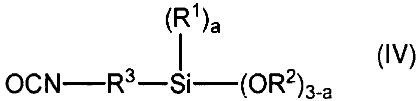 wobei R¹, R², R³ und a bereits vorhergehend beschrieben wurden. Beispiele für geeignete Isocyanatosilane **IS** der Formel (IV) sind Isocyanatomethyltrimethoxysilan, Isocyanatomethyldimethoxymethylsilan 3-Isocyanatopropyltrimethoxysilan, 3-Isocyanatopropyldimethoxymethylsilan, und deren Analoga mit Ethoxy- oder Isopropoxygruppen anstelle der Methoxygruppen am Silicium.

Bevorzugt weist das Polymer als gegenüber Isocyanatgruppen reaktive funktionelle Endgruppen Hydroxylgruppen auf.

Als Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 30'000 g/mol. Andererseits eignen sich auch Hydroxylgruppen aufweisende, insbesondere Hydroxylgruppen terminierte, Polyurethanpolymere zur Umsetzung mit Isocyanatosilanen **IS** der Formel (IV). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **P1** verwendet wird.

Beispielsweise sind geeignete silanfunktionelle Polymere **P2** kommerziell erhältlich unter den Handelsnamen SPUR+^{®} 1010LM, 1015LM und 1050MM von der Firma Momentive Performance Materials Inc., USA, sowie unter den Handelsnamen Geniosil^{®} STP-E15, STP-10 und STP-E35 von der Firma Wacker Chemie AG, Deutschland.

In einer dritten Ausführungsform ist das silanfunktionelle Polymer **P** ein silanfunktionelles Polymer **P3,** welches erhältlich ist durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren gesamte Offenbarung hiermit eingeschlossen ist.

Beispielsweise sind geeignete silanfunktionelle Polymere **P3** kommerziell erhältlich unter den Handelsnamen MS Polymer™ S203H, S303H, S227, S810, MA903 und S943, Silyl™ SAX220, SAX350, SAX400 und SAX725, Silyl™ SAT350 und SAT400, sowie XMAP™ SA100S und SA310S von der Firma Kaneka Corp., Japan, sowie unter den Handelsnamen Excestar^{®} S2410, S2420, S3430, S3630, W2450 und MSX931 von der Firma Asahi Glass Co, Ltd., Japan.

Üblicherweise ist das silanfunktionelle Polymer **P** in einer Menge von 10 bis 80 Gew.-%, insbesondere in einer Menge von 15 bis 70 Gew.-%, bevorzugt 20 bis 40 Gew.-%, bezogen auf die gesamte Zusammensetzung, vorhanden.

Weiterhin umfasst die erfindungsgemässe Zusammensetzung mindestens eine zinnorganische Verbindung.

Bevorzugte zinnorganische Verbindungen sind Dialkylzinnverbindungen wie sie ausgewählt sind aus der Gruppe bestehend aus Dimethylzinndi-2-ethylhexanoat, Dimethylzinndilaurat, Di-n-butylzinndiacetat, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinn-distearat, Di-n-butylzinndimaleinat, Di-n-butylzinndioleat, Di-n-butylzinndiacetat, Di-n-butylzinndioxid, Di-n-octylzinndi-2-ethylhexanoat, Di-n-octylzinndi-2,2-dimethyloctanoat, Di-n-octylzinndimaleinat und Di-n-octylzinndilaurat.

Selbstverständlich ist es möglich oder in gewissen Fällen sogar bevorzugt, Mischungen verschiedener zinnorganischer Verbindungen einzusetzen.

Der Anteil der zinnorganischen Verbindung beträgt 0.01 bis 0.15 Gew.-%, insbesondere 0.05 bis 0.1 Gew.-%, bezogen auf die Gesamtzusammensetzung.

Weiterhin umfasst die erfindungsgemässe Zusammensetzung mindestens ein Titanat.

Als Titanate, auch Organotitanate genannt, werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei diejenigen, welche ausgewählt sind aus der Gruppe bestehend aus Alkoxygruppe, Sulfonatgruppe, Carboxylatgruppe, Dialkylphosphatgruppe, Dialkylpyrophosphatgruppe, Acetoacetatgruppe und Acetylacetonatgruppe. Bevorzugte Titanate sind beispielsweise Tetrabutyl- oder Tetraisopropyltitanat.

Besonders geeignete Titanate weisen mindestens einen mehrzähnigen Liganden, auch Chelatligand genannt, auf. Insbesondere ist der mehrzähnige Ligand ein zweizähniger Ligand.

Vorzugsweise handelt es sich beim zweizähnigen Liganden um einen Liganden der Formel (V)

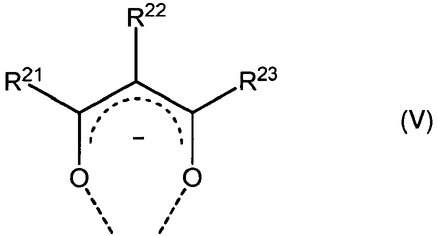

Dabei steht der Rest R²¹ für ein Wasserstoffatom oder für eine lineare oder verzweigte Alkylgruppe mit 1 bis 8 C-Atomen, insbesondere für eine Methylgruppe.

Der Rest R²² steht für ein Wasserstoffatom oder für eine lineare oder verzweigte Alkylgruppe mit 1 bis 8 C-Atomen, welche gegebenenfalls Heteroatome aufweist, insbesondere für ein Wasserstoffatom.

Der Rest R²³ steht für ein Wasserstoffatom oder für eine Alkylgruppe mit 1 bis 8, insbesondere mit 1 bis 3, C-Atomen oder für eine lineare oder verzweigte Alkoxygruppe mit 1 bis 8, insbesondere mit 1 bis 3, C-Atomen.

Bevorzugt handelt es sich beim Titanat, insbesondere um ein Titanat der Formel (VI).

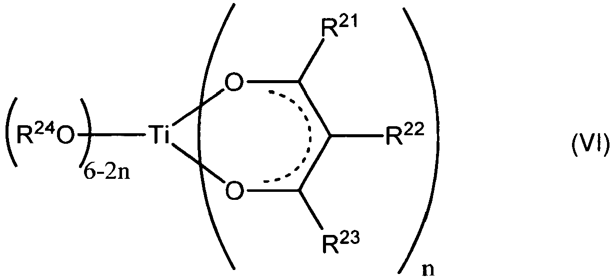

Die Reste R²¹, R²² und R²³ wurden bereits vorhergehend beschreiben.

Der Rest R²⁴ steht für einen linearen oder verzweigten Alkylrest mit 2 bis 20 C-Atomen, insbesondere für einen Isobutyl- oder für einen Isopropylrest.

n steht für einen Wert von 1 oder 2, insbesondere für 2.

Bevorzugt sind Titanate der Formel (VI), wobei der Rest R²¹ für eine Methylgruppe, der Rest R²² für ein Wasserstoffatom, der Rest R²³ für eine Methylgruppe oder Methoxy- oder Ethoxygruppe und der Rest R²⁴ für einen Isobutyl- oder für einen Isopropylrest steht.

Geeignete Titanate sind beispielsweise unter den Handels-namen Tyzor^{®} AA, GBA, GBO, AA-75, AA-65, AA-105, DC, BEAT, IBAY kommerziell erhältlich von der Firma Dorf Ketal oder unter den Handelsnamen Tytan™ PBT, TET, X85, TAA, ET, S2, S4 oder S6 kommerziell erhältlich von Borica.

Selbstverständlich ist es möglich oder in gewissen Fällen sogar bevorzugt, Mischungen verschiedener Titanate einzusetzen.

Der Anteil des Titanats beträgt 0.05 bis 1 Gew.-%, vorzugsweise 0.1 bis 0.6 Gew.-%, insbesondere 0.1 bis 0.3 Gew.-%, bezogen auf die Gesamtzusammensetzung.

Vorzugsweise enthält die Zusammensetzung weiterhin mindestens einen Füllstoff. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.

Eine geeignete Menge Füllstoff liegt beispielsweise im Bereich von 20 bis 60 Gew.-%, bevorzugt 30 bis 60 Gew.-%, bezogen auf die gesamte Zusammensetzung.

Weiterhin kann die erfindungsgemässe Zusammensetzung zusätzlich weitere Bestandteile enthalten. Beispielsweise sind derartige Bestandteile Weichmacher wie Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise aus Polyethylen; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren; Haftvermittler, beispielsweise Epoxysilane, (Meth)acrylsilane, Anhydridosilane oder Addukte der vorgenannten Silane mit primären Aminosilanen, sowie Aminosilane oder Harnstoffsilane; Vernetzer, beispielsweise silanfunktionelle Oligo- und Polymere; Trocknungsmittel, zum Beispiel Vinyltrimethoxysilan, α-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

Weiterhin können gegebenenfalls so genannte Reaktivverdünner eingesetzt werden, welche bei der Aushärtung der Zusammensetzung, insbesondere durch Reaktion mit den Silangruppen, in die Polymermatrix eingebunden werden.

Es ist vorteilhaft, alle genannten, in der Zusammensetzung gegebenenfalls vorhandenen Bestandteile, insbesondere Füllstoff und Katalysator- bzw. Beschleunigersystem, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur unwesentlich verändert. Dies bedingt, dass zur chemischen Aushärtung der beschriebenen Zusammensetzung führende Reaktionen, insbesondere der Silangruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Die vorhergehend beschriebene Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Bei der Applikation der beschriebenen Zusammensetzung auf mindestens einen Festkörper oder Artikel kommen die in der Zusammensetzung enthaltenen Silangruppen in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz von Katalysatoren oder Beschleunigern beschleunigt werden können, härtet die Zusammensetzung schliesslich aus. Dieser Prozess wird auch als Vernetzung bezeichnet.

Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die beispielsweise über einen Statikmischer eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchte und der Klebegeometrie, bestimmt und verlangsamt sich in der Regel mit dem Fortschreiten der Aushärtung.

Weiterhin umfasst die vorliegende Erfindung die Verwendung von mindestens einer zinnorganischen Verbindung zusammen mit mindestens einem Titanat, als Katalysator- oder Beschleunigersystem für die Vernetzung von Zusammensetzungen enthaltend silanfunktionelle Polymere unter Einfluss von Wasser, wobei der Anteil an zinnorganischer Verbindung 0.01 bis 0.15 Gew.-% und der Anteil an Titanat 0.05 bis 1 Gew.-% jeweils bezogen auf die Gesamtzusammensetzung beträgt.

Diese Verwendung eines spezifischen Katalysator- oder Beschleunigersystems hat den Vorteil, dass eine Zusammensetzungen enthaltend silanfunktionelle Polymere in ausgehärtetem Zustand verbesserte mechanische Eigenschaften aufweisen und dennoch bei der Aushärtung eine kurze Hautbildungszeit aufweisen.

Typischerweise weist eine erfindungsgemässe Zusammensetzung im ausgehärteten Zustand, d.h. in diesem Fall nach einer Aushärtung der Zusammensetzung während 7 Tagen bei 23°C und 50% relativer Luftfeuchtigkeit, eine Zugfestigkeit von ≥ 2 MPa, eine Bruchdehnung von ≥ 450%, insbesondere von ≥ 500%, und eine Zugscherfestigkeit von ≥ 1.5 MPa auf. Während der Aushärtung bei den gegebenen Bedingungen ist die Hautbildungszeit typischerweise kürzer als 2 Stunden, insbesondere kürzer als 1 Stunde.

Die Messmethoden für die angegebenen Werte sind im Rahmen der Ausführungsbeispiele beschrieben.

Weiterhin umfasst die vorliegende Erfindung die Verwendung einer vorhergehend beschriebenen Zusammensetzung als feuchtigkeitshärtender Klebstoff, Dichtstoff oder Beschichtung, insbesondere als Baudichtstoff. Bevorzugt ist die Verwendung als niedermoduliger Baudichtstoff für Anschluss- oder Dilatationsfugen.

Die erfindungsgemässe Zusammensetzung wird insbesondere verwendet in einem Verfahren des Verklebens zweier Substrate **S1** und **S2** umfassend die Schritte:
i) Applikation einer Zusammensetzung gemäss vorhergehender Beschreibung auf ein Substrat **S1** und/oder ein Substrat **S2;**
ii) Kontaktieren der Substrate **S1** und **S2** über die applizierte Zusammensetzung innerhalb der Offenzeit der Zusammensetzung;
iii) Aushärtung der Zusammensetzung mittels Wasser;
wobei die Substrate **S1** und **S2** gleich oder verschieden voneinander sind.

Weiterhin kann die erfindungsgemässe Zusammensetzung auch verwendet werden in einem Verfahren der Abdichtung oder des Beschichtens umfassend die Schritte:
i) Applikation einer Zusammensetzung gemäss vorhergehender Beschreibung auf ein Substrat **S1** und/oder zwischen zwei Substrate **S1** und **S2;**
ii) Aushärtung der Zusammensetzung mittels Wasser, insbesondere in der Form von Luftfeuchtigkeit;
wobei die Substrate **S1** und **S2** gleich oder verschieden voneinander sind.

Als Substrate **S1** und/oder **S2** eignen sich insbesondere Substrate, welche ausgewählt sind aus der Gruppe bestehend aus Beton, Mörtel, Backstein, Ziegel, Gips, ein Naturstein wie Granit oder Marmor, Glas, Glaskeramik, Metall oder Metalllegierung, Holz, Kunststoff und Lack.

Die erfindungsgemässe Zusammensetzung weist bevorzugt eine pastöse Konsistenz mit strukturviskosen Eigenschaften auf. Eine solche Zusammensetzung wird mittels einer geeigneten Vorrichtung auf das Substrat aufgetragen, bevorzugt in Form einer Raupe, wobei diese vorteilhaft eine im Wesentlichen runde oder dreieckige Querschnittsfläche aufweist. Geeignete Methoden zum Auftragen der Zusammensetzung sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Eine erfindungsgemässe Zusammensetzung mit guten Applikationseigenschaften weist eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Die erfindungsgemässe Zusammensetzung wird insbesondere in einem Temperaturbereich zwischen 5 und 45°C, bevorzugt im Bereich der Raumtemperatur, aufgetragen und härtet auch bei diesen Bedingungen aus.

Weiterhin betrifft die Erfindung eine gehärtete Zusammensetzung, welche erhältlich ist aus einer Zusammensetzung, wie sie vorhergehend beschrieben worden ist, nach deren Härtung mit Wasser, insbesondere in Form von Luftfeuchtigkeit.

Bei den Artikeln, welche mit einer erfindungsgemässen Zusammensetzung verklebt, abgedichtet oder beschichtet werden, handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltsmaschine, oder ein Transportmittel oder ein Anbauteil eines Transportmittels.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Die **Zugfestigkeit,** die **Bruchdehnung,** und der **Elastizitätsmodul** (E-Modul) bei 0 bis 5% Dehnung wurden nach DIN 53504 (Zuggeschwindigkeit: 200 mm/min) an während 7 Tagen bei 23°C und 50% relativer Luftfeuchtigkeit ausgehärteten Filmen mit einer Schichtdicke von 2 mm bestimmt.

Die **Zugscherfestigkeit** wurde in Anlehnung an ISO 4587/DIN EN 1465 auf einer Zugmaschine Zwick/Roell Z005 bestimmt, wobei jeweils zwei gleiche Substrate aus Glas miteinander verklebt wurden (Klebefläche: 12x25 mm; Schichtdicke: 4.0 mm; Messgeschwindigkeit: 20 mm/min; Temperatur: 23°C (falls nicht anders genannt). Die Aushärtung der Zusammensetzungen erfolgte während 7 Tagen bei 23°C und 50% relativer Luftfeuchtigkeit.

Die **Shore A-Härte** wurde bestimmt nach DIN 53505, an während 7 Tagen bei 23°C und 50% relativer Luftfeuchtigkeit ausgehärteten Probekörpern mit einer Schichtdicke von 6 mm.

Die **Hautbildungszeit** (Zeit bis zur Klebefreiheit, "tack-free time") wurde bei 23°C und 50% relativer Luftfeuchtigkeit bestimmt. Zur Bestimmung der Hautbildungszeit wurde ein kleiner Teil des raumtemperaturwarmen Klebstoffs in einer Schichtdicke von ca. 2 mm auf Pappkarton aufgetragen und die Zeit bestimmt, die es dauerte, bis beim leichten Antippen der Oberfläche des Klebstoffs mittels einer Pipette aus LDPE erstmals keine Rückstände auf der Pipette mehr zurückblieben.

Der **Weiterreisswiderstand** wurde bestimmt nach DIN 53515, an während 7 Tagen bei 23°C und 50% relativer Luftfeuchtigkeit ausgehärteten Filmen mit einer Schichtdicke von 2 mm.

### Herstellung des silanfunktionellen Polyurethanpolymers SH

Unter Stickstoffatmosphäre wurden 1000 g Polyol Acclaim^{®} 12200 (Bayer MaterialScience AG, Deutschland; low monol Polyoxypropylendiol; OH-Zahl 11.0 mg KOH/g; Wassergehalt ca. 0.02 Gew.-%), 46.17 g Isophorondiisocyanat (Vestanat^{®} IPDI), 261.72 g Diisodecyl¬phtalat (Palatinol^{®} Z) und 0.14 g Di-n-butyl-zinndilaurat (Metatin^{®} K712, Acima AG, Schweiz) unter stetigem Rühren auf 90 °C aufgeheizt und bei dieser Temperatur belassen. Nach einer Stunde Reaktionszeit wurde mittels Titration ein freier Gehalt an Isocyanatgruppen von 0.70 Gew.-% erreicht. Anschliessend wurden 69.88 g N-(3-Trimethoxysilyl-propyl)-amino-bernsteinsäure-diethylester beigefügt und für weitere 2 bis 3 Stunden bei 90 °C weitergerührt. Die Reaktion wurde abgebrochen, sobald kein freies Isocyanat mehr mittels IR-Spektroskopie (2275 - 2230 cm⁻¹) nachzuweisen war. Das Produkt wurde auf Raumtemperatur (23°C) abgekühlt und unter Aus¬schluss von Feuchtigkeit aufbewahrt (theoretischer Polymer¬gehalt = 90%). Das so hergestellte silanfunktionelle Polyurethanpolymer ***SH*** ist bei Raumtemperatur flüssig. N-(3-Trimethoxysilyl-propyl)-amino-bernsteinsäure-diethylester wurde wie folgt hergestellt: 51.0 g 3-Aminopropyl-trimethoxysilan (Silquest^{®} A-1110, Momentive Performance Materials Inc., USA) wurden vorgelegt. Unter gutem Rühren wurden bei Raumtemperatur langsam 49.0 g Maleinsäure-diethylester (Fluka Chemie GmbH, Schweiz) zugegeben und die Mischung während 2 Stunden bei Raumtemperatur gerührt.

### Herstellung der Klebstoffe

In einem Vakuummischer wurden entsprechend den in den Tabellen 1 bis 3 angegebenen Gewichtsteilen das silanfunktionelle Polymer ***SH*,** Diisodecylphthalat (DIDP) und Vinyltrimethoxysilan (Trocknungsmittel, Silquest^{®} A-171 von Momentive Performance Materials Inc., USA) während 5 Minuten gut vermischt. Anschliessend wurde getrocknete, gefällte Kreide (Socal^{®} U1 S2, Solvay SA, Belgien) während 15 Minuten bei 60°C eingeknetet. Bei ausgeschalteter Heizung wurden anschliessend N-(2-Aminoethyl)-(3-aminopropyl)trimethoxysilan (Haftvermittler, Silquest^{®} A-1120 von Momentive Performance Materials Inc.), Di-*n*-butyl-zinndilaurat (DBTDL, Metatin^{®} K712, zugegeben als 10%-ige Lösung in DIDP) und/oder Titanat (Tyzor^{®} IBAY von Dorf Ketal) unter Vakuum während 10 Minuten zu einer homogenen Paste verarbeitet. Diese wurde dann in innenlackierte Aluminium-Spreizkolbenkartuschen abgefüllt.

**Tabelle 1: Klebstoffzusammensetzungen in Gewichtsteilen und Resultate**

| | ***1*** | ***2*** | ***3*** | ***4*** | ***5*** | ***6*** |
|---|---|---|---|---|---|---|
| ***SH*** | 30 | 30 | 30 | 30 | 30 | 30 |
| DIDP | 22.9 | 22.8 | 22.7 | 22.4 | 22.1 | 21.8 |
| Silquest^{®} A-171 | 1 | 1 | 1 | 1 | 1 | 1 |
| Socal^{®} U1S2 | 45 | 45 | 45 | 45 | 45 | 45 |
| Silquest^{®} A-1120 | 1 | 1 | 1 | 1 | 1 | 1 |
| DBTDL | 0.1 | 0.2 | | | | |
| Tyzor^{®} IBAY | | | 0.3 | 0.6 | 0.9 | 1.2 |
| Zugfestigkeit [MPa] | 2.2 | 1.7 | 2.1 | 2.2 | 2.2 | 2.3 |
| Bruchdehnung [%] | 420 | 330 | 416 | 546 | 579 | 596 |
| Zugscherfestigkeit [MPa] | 1.2 | 0.9 | 1.3 | 1.5 | 1.9 | 2 |
| Weiterreisswiderstand [N/mm] | 10 | 9 | 11 | 14 | 15 | 15 |
| E-Modul 0-5% [MPa] | 1.4 | 1.2 | 0.8 | 0.8 | 1.2 | 1.3 |
| Hautbildungszeit [min] | 42 | | > 2h | > 2h | > 2h | 110 |
| Shore A | 39 | 36 | 29 | 30 | 36 | 36 |

**Tabelle 2: Klebstoffzusammensetzungen in Gewichtsteilen und Resultate**

| | ***1*** | ***7*** | ***8*** | ***9*** | ***10*** |
|---|---|---|---|---|---|
| ***SH*** | 30 | 30 | 30 | 30 | 30 |
| DIDP | 22.9 | 22.75 | 22.6 | 22.45 | 22.3 |
| Silquest^{®} A-171 | 1 | 1 | 1 | 1 | 1 |
| Socal^{®} U1S2 | 45 | 45 | 45 | 45 | 45 |
| Silquest^{®} A-1120 | 1 | 1 | 1 | 1 | 1 |
| DBTDL | 0.1 | 0.1 | 0.1 | 0.1 | 0.1 |
| Tyzor^{®} IBAY | | 0.15 | 0.3 | 0.45 | 0.6 |
| Zugfestigkeit [MPa] | 2.2 | 2.2 | 2.4 | 2.2 | 2.3 |
| Bruchdehnung [%] | 420 | 457 | 517 | 504 | 574 |
| Zugscherfestigkeit [MPa] | 1.2 | 1.5 | 1.5 | 1.8 | 1.8 |
| Weiterreisswiderstand [N/mm] | 10 | 10 | 13 | 14 | 15 |
| E-Modul 0-5% [MPa] | 1.4 | 1.3 | 1.2 | 1.2 | 1.2 |
| Hautbildungszeit [min] | 42 | 42 | 48 | 52 | 71 |
| Shore A | 39 | 39 | 39 | 38 | 37 |

**Tabelle 3: Klebstoffzusammensetzungen in Gewichtsteilen und Resultate**

| | ***1*** | ***11*** | ***12*** | ***13*** | ***14*** |
|---|---|---|---|---|---|
| ***SH*** | 30 | 30 | 30 | 30 | 30 |
| DIDP | 22.9 | 22.3 | 22.3 | 22.3 | 22.3 |
| Silquest^{®} A-171 | 1 | 1 | 1 | 1 | 1 |
| Socal^{®} U 1 S2 | 45 | 45 | 45 | 45 | 45 |
| Silquest^{®} A-1120 | 1 | 1 | 1 | 1 | 1 |
| DBTDL | 0.1 | 0.1 | 0.1 | 0.1 | |
| DOTDL | | | | | 0.1 |
| Tyzor^{®} IBAY | | 0.6 | | | |
| Tytan™ TAA | | | 0.6 | | 0.6 |
| Tytan™ S2 | | | | 0.6 | |
| Zugfestigkeit [MPa] | 2.2 | 2.3 | 2.5 | 2.3 | 2.4 |
| Bruchdehnung [%] | 420 | 574 | 559 | 577 | 591 |
| Zugscherfestigkeit [MPa] | 1.2 | 1.8 | 1.8 | 1.8 | 1.8 |
| Weiterreisswiderstand [N/mm] | 10 | 15 | 13 | 14 | 14 |
| E-Modul 0-5% [MPa] | 1.4 | 1.2 | 1.3 | 1.1 | 1.2 |
| Hautbildungszeit [min] | 42 | 71 | 48 | 75 | 45 |
| Shore A | 39 | 37 | 38 | 37 | 38 |

## Patentansprüche

1. Zusammensetzung umfassend
a) mindestens ein silanfunktionelles Polymer **P**,
b) mindestens eine zinnorganische Verbindung sowie
c) mindestens ein Titanat,
**dadurch gekennzeichnet, dass** der Anteil an zinnorganischer Verbindung 0.01 bis 0.15 Gew.-% und der Anteil an Titanat 0.05 bis 1 Gew.-% jeweils bezogen auf die Gesamtzusammensetzung beträgt.

2. Zusammensetzung gemäss Anspruch 1, **dadurch gekennzeichnet, dass** das silanfunktionelle Polymer **P** ausgewählt ist aus
- einem silanfunktionellen Polyurethanpolymer **P1,** erhältlich durch die Umsetzung eines Silans mit mindestens einer gegenüber Isocyanatgruppen reaktiven Gruppe mit einem Isocyanatgruppen aufweisenden Polyurethanpolymer,
- einem silanfunktionellen Polyurethanpolymer **P2,** erhältlich durch die Umsetzung eines Isocyanatosilans **IS** mit einem Polymer, welches gegenüber Isocyanatgruppen reaktive funktionelle Endgruppen aufweist, oder
- einem silanfunktionellen Polymer **P3,** erhältlich durch eine Hydrosilylierungsreaktion von Polymeren mit endständigen Doppelbindungen.

3. Zusammensetzung gemäss einem der Ansprüche 1 oder 2, **dadurch gekennzeichnet, dass** die zinnorganische Verbindung eine Dialkylzinnverbindung ist.

4. Zusammensetzung gemäss einem der vorhergehenden Ansprüche,
**dadurch gekennzeichnet, dass** der Anteil an zinnorganischer Verbindung 0.05 bis 0.1 Gew.-% bezogen auf die Gesamtzusammensetzung beträgt.

5. Zusammensetzung gemäss einem der vorhergehenden Ansprüche,
**dadurch gekennzeichnet, dass** der Anteil an Titanat 0.1 bis 0.6 Gew.-%, insbesondere 0.1 bis 0.3 Gew.-%, bezogen auf die Gesamtzusammensetzung beträgt.

6. Zusammensetzung gemäss einem der vorhergehenden Ansprüche,
**dadurch gekennzeichnet, dass** das Titanat mindestens einen mehrzähnigen Liganden aufweist.

7. Zusammensetzung gemäss Anspruch 5, **dadurch gekennzeichnet, dass**
das Titanat ein Titanat der Formel (VI) ist 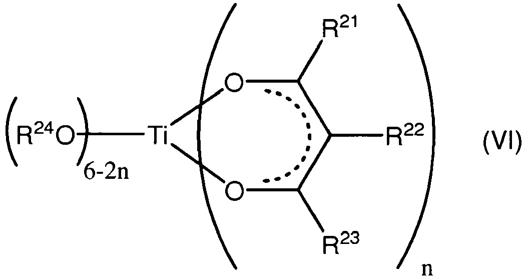 wobei
R²¹ für ein Wasserstoffatom oder für eine lineare oder verzweigte Alkylgruppe mit 1 bis 8 C-Atomen steht;
R²² für ein Wasserstoffatom oder für eine lineare oder verzweigte Alkylgruppe mit 1 bis 8 C-Atomen, welche gegebenenfalls Heteroatome aufweist, steht;
R²³ für ein Wasserstoffatom oder für eine Alkylgruppe mit 1 bis 8 C-Atomen oder für eine lineare oder verzweigte Alkoxygruppe mit 1 bis 8 C-Atomen, steht;
R²⁴ für einen linearen oder verzweigten Alkylrest mit 2 bis 20 C-Atomen steht; und
n für einen Wert von 1 oder 2 steht.

8. Verwendung von mindestens einer zinnorganischen Verbindung zusammen mit mindestens einem Titanat als Katalysator- oder Beschleunigersystem für die Vernetzung von Zusammensetzungen enthaltend silanfunktionelle Polymere unter Einfluss von Wasser, **dadurch gekennzeichnet, dass** der Anteil an zinnorganischer Verbindung 0.01 bis 0.15 Gew.-% und der Anteil an Titanat 0.05 bis 1 Gew.-% jeweils bezogen auf die Gesamtzusammensetzung beträgt.

9. Verwendung einer Zusammensetzung gemäss einem der Ansprüche 1 bis 7 als Klebstoff, Dichtstoff oder Beschichtung.

10. Gehärtete Zusammensetzung erhältlich ist aus einer Zusammensetzung gemäss einem der Ansprüche 1 bis 7 nach deren Härtung mit Wasser.

## Claims

1. Composition comprising
a) at least one silane-functional polymer **P**,
b) at least one organotin compound and
c) at least one titanate,
wherein the proportion of organotin compound is 0.01 to 0.15 % by weight and the proportion of titanate is 0.05 to 1 % by weight, in each case based on the overall composition.

2. Composition according to claim 1, wherein the silane-functional polymer P is selected from
- a silane-functional polyurethane polymer **P1,** obtainable by reacting a silane having at least one group reactive toward isocyanate groups with a polyurethane polymer containing isocyanate groups,
- a silane-functional polyurethane polymer **P2,** obtainable by reacting an isocyanatosilane **IS** with a polymer containing functional end groups reactive toward isocyanate groups, or
- a silane-functional polymer **P3,** obtainable by a hydrosilylation reaction of polymers with terminal double bonds.

3. Composition according to one of claims 1 or 2, wherein the organotin compound is a dialkyltin compound.

4. Composition according to one of the preceding claims, wherein the proportion of organotin compound is 0.05 to 0.1 % by weight based on the overall composition.

5. Composition according to one of the preceding claims, wherein the proportion of titanate is 0.1 to 0.6 % by weight, especially 0.1 to 0.3 % by weight, based on the overall composition.

6. Composition according to one of the preceding claims, wherein the titanate has at least one multidentate ligand.

7. Composition according to claim 5, wherein the titanate is a titanate of formula (VI) 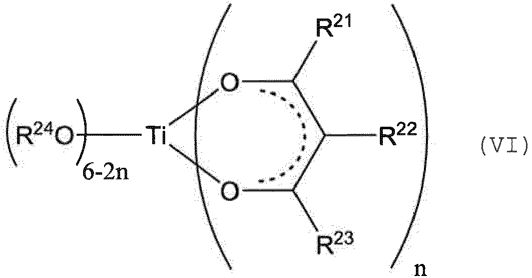 where
R²¹ represents a hydrogen atom or a linear or branched alkyl group with 1 to 8 C atoms;
R²² represents a hydrogen atom or a linear or branched alkyl group with 1 to 8 C atoms, which optionally contains heteroatoms;
R²³ represents a hydrogen atom or an alkyl group with 1 to 8 C atoms or a linear or branched alkoxy group with 1 to 8 C atoms;
R²⁴ represents a linear or branched alkyl radical with 2 to 20 C atoms; and
n represents a value of 1 or 2.

8. Use of at least one organotin compound together with at least one titanate as catalyst or accelerator system for the cross-linking of compositions containing silane-functional polymers under the influence of water, wherein the proportion of organotin compound is 0.01 to 0.15 % by weight and the proportion of titanate is 0.05 to 1 % by weight, in each case based on the overall composition.

9. Use of a composition according to one of claims 1 to 7 as an adhesive, sealant or coating.

10. Cured composition obtainable from a composition according to one of claims 1 to 7 after curing thereof with water.

## Revendications

1. Composition comprenant :
a) au moins un polymère à fonction silane P,
b) au moins un composé organique d'étain, et
c) au moins un titanate,
**caractérisée en ce que** la proportion de composé organique d'étain est de 0,01 à 0,15 % en poids et la proportion de titanate est de 0,05 à 1 % en poids, à chaque fois par rapport à la composition totale.

2. Composition selon la revendication 1, **caractérisée en ce que** le polymère à fonction silane P est choisi parmi :
- un polymère de polyuréthane à fonction silane P1, pouvant être obtenu par la mise en réaction d'un silane comprenant au moins un groupe réactif avec les groupes isocyanate avec un polymère de polyuréthane comprenant des groupes isocyanate,
- un polymère de polyuréthane à fonction silane P2, pouvant être obtenu par la mise en réaction d'un isocyanatosilane IS avec un polymère qui comprend des groupes terminaux fonctionnels réactifs avec les groupes isocyanate, ou
- un polymère à fonction silane P3, pouvant être obtenu par une réaction d'hydrosilylation de polymères comprenant des doubles liaisons terminales.

3. Composition selon l'une quelconque des revendications 1 ou 2, **caractérisée en ce que** le composé organique d'étain est un composé de dialkylétain.

4. Composition selon l'une quelconque des revendications précédentes, **caractérisée en ce que** la proportion de composé organique d'étain est de 0,05 à 0,1 % en poids, par rapport à la composition totale.

5. Composition selon l'une quelconque des revendications précédentes, **caractérisée en ce que** la proportion de titanate est de 0,1 à 0,6 % en poids, notamment de 0,1 à 0,3 % en poids, par rapport à la composition totale.

6. Composition selon l'une quelconque des revendications précédentes, **caractérisée en ce que** le titanate comprend au moins un ligand polydentate.

7. Composition selon la revendication 5, **caractérisée en ce que** le titanate est un titanate de formule (VI) 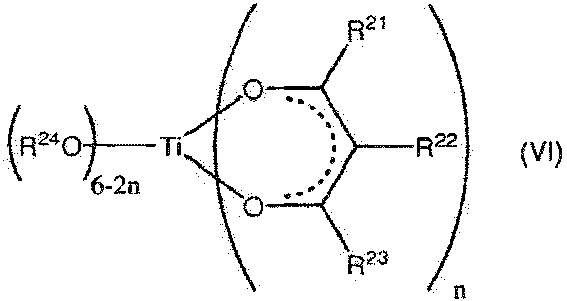 dans laquelle
R²¹ représente un atome d'hydrogène ou un groupe alkyle linéaire ou ramifié de 1 à 8 atomes C,
R²² représente un atome d'hydrogène ou un groupe alkyle linéaire ou ramifié de 1 à 8 atomes C, qui comprend éventuellement des hétéroatomes ;
R²³ représente un atome d'hydrogène ou un groupe alkyle de 1 à 8 atomes C ou un groupe alcoxy linéaire ou ramifié de 1 à 8 atomes C ;
R²⁴ représente un radical alkyle linéaire ou ramifié de 2 à 20 atomes C ; et
n représente une valeur de 1 ou 2.

8. Utilisation d'au moins un composé organique d'étain conjointement avec au moins un titanate en tant que système catalytique ou accélérateur pour la réticulation de compostions contenant des polymères à fonction silane sous l'effet de l'eau, **caractérisée en ce que** la proportion de composé organique d'étain est de 0,01 à 0,15 % en poids et la proportion de titanate est de 0,05 à 1 % en poids, à chaque fois par rapport à la composition totale.

9. Utilisation d'une composition selon l'une quelconque des revendications 1 à 7 en tant qu'adhésif, agent d'étanchéité ou revêtement.

10. Composition durcie pouvant être obtenue à partir d'une composition selon l'une quelconque des revendications 1 à 7 après son durcissement avec de l'eau.
